# EUROPÄISCHE PATENTSCHRIFT

(11) **EP 2 491 466 B1**
(45) Veröffentlichungstag und Bekanntmachung des Hinweises auf die Patenterteilung: **02.06.2021**
(21) Anmeldenummer: 10771321.6
(22) Anmeldetag: 23.09.2010
(51) Int. Cl.: G05B 19/042, G05B 9/02, H02B 3/00

(54) **DIAGNOSE- UND WARTUNGSEINRICHTUNG FÜR EINE SCHALTANLAGE SOWIE DEMGEMÄSSE SCHALTANLAGE**
DIAGNOSIS AND MAINTENANCE DEVICE FOR A SWITCHGEAR ASSEMBLY AND CORRESPONDING SWITCHGEAR ASSEMBLY
DISPOSITIF DE DIAGNOSTIC ET DE MAINTENANCE POUR UNE INSTALLATION DE COMMUTATION AINSI QU'INSTALLATION DE COMMUTATION AINSI ÉQUIPÉE

(30) Priorität: 19.10.2009 DE 102009049931
(43) Veröffentlichungstag der Anmeldung: 29.08.2012
(73) Patentinhaber: ABB Schweiz AG, 5400 Baden (CH)
(72) Erfinder: MERKEL, Hans-Peter, 69198 Schriesheim (DE); FORSTBACH, Matthias, 64683 Einhausen (DE); GRAF, Ralf, 68259 Mannheim (DE)
(74) Vertreter: Kesselhut, Wolf
(86) Internationale Anmeldenummer: PCT/EP2010/005822
(87) Internationale Veröffentlichungsnummer: WO 2011/047766

(56) Entgegenhaltungen:
- EP-A2- 1 586 779
- DE-A1- 10 120 237
- DE-A1- 10 315 623
- Grasso Gea: "Grasso System Control GSC 2-stage Packages and Chiller with Grasso Screw Compressors", , 7 September 2006 (2006-09-07), XP055630561, Retrieved from the Internet: URL:https://www.gea.com/docnav/Product%20D ocuments/Grasso%20GSC%20-%20SC/_510117_imm _gsc_sp2_gbr_.pdf [retrieved on 2019-10-09]
- KLEINER F ET AL: "Ecology and economy decide for 50 000 HP electric turbocompressor drivers", INDUSTRY APPLICATIONS CONFERENCE, 2000. CONFERENCE RECORD OF THE 2000 IEEE 8-12 OCTOBER 2000, PISCATAWAY, NJ, USA,IEEE, vol. 4, 8 October 2000 (2000-10-08), pages 2738-2748, XP010522643, ISBN: 978-0-7803-6401-1

## Beschreibung

Die Erfindung betrifft eine Schaltanlage mit einer Diagnose- und Wartungseinrichtung.

Bei bekannten Anlagen und Einrichtungen sind Diagnose- und Wartungsinformationen üblicherweise im jeweiligen Einzelgerät integriert und können über unterschiedlichste Kommunikationsschnittstellen sowie -kanäle von Außen beziehungsweise mittels außerhalb der Schaltanlage mittels separat und vergleichsweise aufwendig zu installierender und einzurichtender Systeme und diesbezüglicher Werkzeuge, beispielsweise Systeme zum Wartungsmanagement, Asset Management Systeme oder SCADA-Systeme abgefragt, ausgegeben und angezeigt werden.

Der Installations- und Pflegeaufwand derartiger Systeme, insbesondere auch in technischer Hinsicht, ist dabei vergleichsweise hoch. Auch die Handhabung und Nutzung dieser Systeme ist vergleichsweise komplex und in der Regel nicht ohne gesonderte Schulungen und fachspezifisches Sonderwissen bewältigbar.

Dokument DE 101 20 237 A1 offenbart eine Wartungseinrichtung für eine Schaltanlage in Mittel- Hochspannungsnetzen.

Eine möglichst einfache und effiziente Abfrage, insbesondere Fernabfrage, vor Ort in einer Schaltanlage bereitgestellter beziehungsweise zur Verfügung stehender Informationen, insbesondere Diagnose- und Wartungsinformationen der verschiedenen Schaltanlagenkomponenten oder - einbauten, ist bislang jedoch nicht oder nur unzureichend möglich.

Der Erfindung stellt sich somit die Aufgabe eine verbesserte und vereinfachte Abfrage vor Ort verfügbarer Wartungs- und Diagnoseinformationen einer Schaltanlage zu ermöglichen.

Diese Aufgabe wird durch eine Schaltanlage mit den Merkmalen des Anspruchs 1 gelöst.

Vorteilhafte Ausgestaltungen und Weiterbildungen der Erfindung sind im weiteren Anspruch und der nachfolgenden Beschreibung angegeben.

Die erfindungsgemäße Diagnose- und Wartungseinrichtung für die Schaltanlage, insbesondere eine Niederspannungsschaltanlage, umfasst eine Datenverarbeitungseinrichtung sowie wenigstens eine erste, interne Schnittstelleneinrichtung, welche in Kommunikationsverbindung mit wenigstens einem angeschlossenen und kommunikationsfähigen Gerät in der jeweiligen Schaltanlage steht und dessen Diagnose- und Wartungsinformationen und/oder Status- und/oder Zustandsinformationen, das heißt die vor Ort in den jeweiligen Geräten selbst abrufbar gesicherten oder hinterlegten Informationen abfragt und aufbereitet und als verwertbare und menschenlesbare Information, insbesondere als ausformulierten Text, Tabellen und/oder Listen und/oder graphisch aufbereitet, insbesondere in Kurvendarstellung, abrufbar bereitstellt und ausgibt und/oder anzeigt.

Das bedeutet, das Steuer- und Schutzgeräte, Gateways, sonstige Controller der insbesondere Niederspannungsschaltanlage (NS-Schaltanlage) mit diesem Gerät, der Diagnose- und Wartungseinrichtung, in Kommunikationsverbindung stehen und/oder an dieses Gerät angeschlossen sind. Die Diagnose und Wartungsinformationen werden abgefragt, gesammelt und aufbereitet und über ein Man-Machine-Interface (MMI) oder Human-Machine-Interface (HMI) ausgegeben und/oder angezeigt.

Die Anzeige beziehungsweise Darstellung kann dabei in Listenform, in Fließtext, mittels Masken und/oder unter Einbindung von Schaltflächen für verschiedenartige Filter und/oder Sortierungen erfolgen. Dies bereitzustellen umfasst die Diagnose- und Wartungseinrichtung wenigstens eine externe Schnittstelleneinrichtung zur externen Kommunikation, beispielsweise über Inter- und/oder Ethernet, mit wenigstens einer externen Datenverarbeitungseinrichtung, beispielsweise einem Desktop PC, einem Notebook oder Laptop, einem PDA oder einem internetfähigen Handy oder "mobile phone".

Die erfindungsgemässe Diagnose- und Wartungseinrichtung umfasst wenigstens einen Datenspeicher für die Speicherung von Daten zur Diagnose oder Wartung oder für zusätzliche Funktionen, welche über das jeweilige Man-Machine-Interface, beispielsweise in Listenform, mit Filtern, als Text, als graphische Darstellung, als Kurve und dergleichen im Zusammenwirken mit der Datenverarbeitungseinrichtung zugreifbar und abrufbar sowie insbesondere anzeigbar sind.

In einer vorteilhaften Ausführungsform ist die Diagnose- und Wartungseinrichtung selbstkonfigurierend.

Weiterhin ist vorsehbar, dass die Diagnose und Wartungseinrichtung temporär oder permanent oder auch remote eingesetzt werden kann.

Die vorstehend angegebene Erfindung erleichtert den Zugang, insbesondere Fernzugang, zu den vor Ort gesicherten beziehungsweise abgelegten Informationen, insbesondere Diagnose- und Wartungsinformationen und/oder Status- und/oder Zustandsinformationen einer Niederspannungsschaltanlage.

Mittels einer Diagnose- und Wartungseinrichtung, wie vorstehend angegeben, ist das jeweilige Erfordernis hinfällig, dass es sich bei dem jeweiligen Anwender beziehungsweise Bediener um einen Experten für die jeweilige Schaltanlage, insbesondere die jeweilige Niederspannungsschaltanlage, handeln muss. Auch ist keine besondere fachspezifische Schulung und/oder Ausbildung mehr erforderlich, insbesondere kein Handbuch mehr zu lesen oder zu studieren, und es sind keine Bits mehr zu interpretieren, um die Wartungs- oder Diagnoseinformationen der jeweiligen Schaltanlage lesen oder verstehen zu können, denn die Diagnose- und Wartungseinrichtung übernimmt all diese Funktionen und Aufgaben.

Gemäß der Erfindung ist zu jedem Diagnose- oder Wartungsalarm und/oder Hinweis ein entsprechender Hilfetext in der Diagnose- und Wartungseinrichtung verfügbar beziehungsweise abrufbar, der alle notwendigen Informationen/Angaben auf grundlegende Fragen, wie beispielsweise
was ist passiert?
wo ist es passiert?
wer hat etwas zu tun?
was ist zu tun?
welche Ursache hat es?,
enthält und/oder bereitstellt.

In einer weiteren Ausgestaltung der Erfindung ist vorsehbar, dass hierarchisch darüberliegenden Systeme automatisch beziehungsweise automatisiert über beispielsweise Filetransfer auf die entsprechenden Information, wie beispielsweise Listen oder Daten, oder über eine integrierte externe OPC Schnittstelle zugreifen können. Ein Zugriff ist ebenfalls über das integrierte Man-Machine-Interface (MMI) möglich, beispielsweise mittels Webservertechnologie oder mittels anderer vergleichbarer Systeme und Techniken.

Die weitere Darlegung der Erfindung sowie vorteilhafter Ausgestaltungen und Weiterbildungen erfolgt nachstehend anhand einer Figur mit Ausführungsbeispiel.

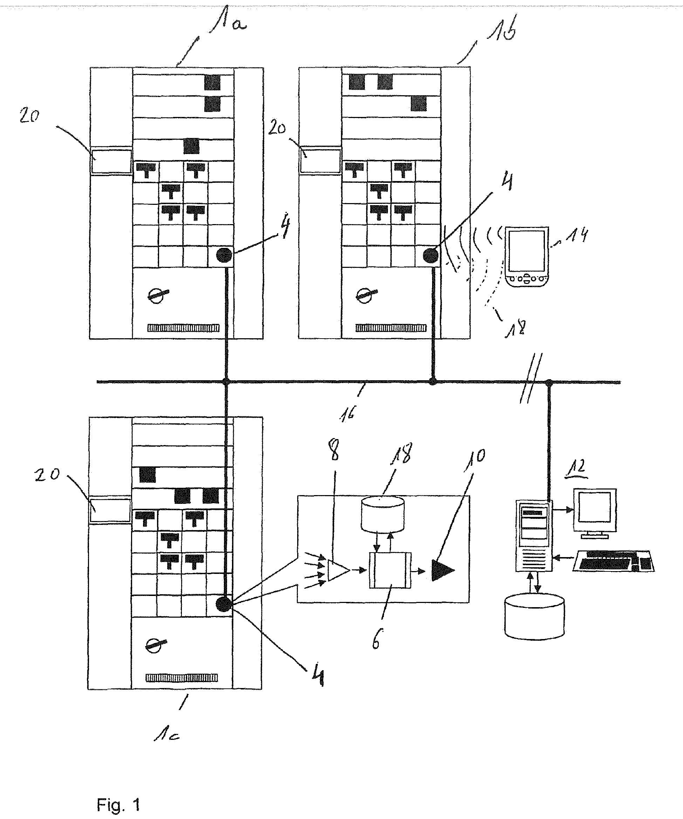

In Fig. 1 ist eine Schaltfeld mit drei Niederspannungsschaltanlagen 1a,1b,1c gezeigt, wobei jede der Schaltanlagen 1a,1b,1c eine Diagnose- und Wartungseinrichtung 4 für eine Schaltanlage aufweist. Die jeweilige Diagnose- und Wartungseinrichtung 4 umfasst dabei wenigsten eine Datenverarbeitungseinrichtung 6, und wenigstens eine erste, für die interne Kommunikation vorgesehene Schnittstelleneinrichtung 8, welche in Kommunikationsverbindung mit allen kommunikationsfähigen, in der jeweiligen Schaltanlage 1a,1b,1c angeordneten und angeschlossenen Geräten und/oder Ein schubmodulen, die MotorControl-Module, Motorstarter, Module zur Leistungsverteilung und Leistungsschalter umfassen, steht, wobei die Diagnose- und Wartungseinrichtung die Diagnose- und Wartungsinformation, das heißt die vor Ort in den Geräten oder Modulen selbst abrufbar gesicherten oder hinterlegten Informationen, abfragt und aufbereitet und als verwertbare und menschenlesbare Informationen, insbesondere als ausformulierten Text, Tabellen und/oder Listen ausgibt und/oder graphisch aufbereitet ausgibt und/oder anzeigt.

Zur Ausgabe der aufbereiteten Informationen ist vorteilhaft wenigstens eine weitere, für die externe Kommunikation vorgesehene Schnittstelleneinrichtung 10 vorgesehen, wobei Diagnose und Wartungsinformationen von den einzelnen Geräten und oder Modulen abgefragt, gesammelt, mittels der Datenverarbeitungseinrichtung 6 der Diagnose- und Wartungseinrichtung aufbereitet und mittels der wenigstens einen weiteren Schnittstelleneinrichtung 10 mittels eines Man-Machine-Interface (MMI) oder Human-Machine-Interface (HMI) auf wenigstens einer weiteren externen Datenverarbeitungseinrichtung, insbesondere einem Desktop PC 12 und/oder einem Notebook und/oder einem Laptop und/oder einem PDA 14 und/oder einem Handy ausgegeben und/oder angezeigt werden.

Die interne sowie externe Kommunikation können dabei drahtgebunden 16 oder drahtlos 18, insbesondere unter Einbeziehung und Verwendung der OPC-Technologie sowie diesbezüglicher Protokolle aber auch des Internet sowie der Ethernettechnologie erfolgen. Auch die Verwendung gängiger Busse sowie Feldbussysteme, wie beispielsweise Profibus, Modbus, CAN, CANopen, USB, SCSI, Ethernet und dergleichen, sowie diesbezüglicher Schnittstellen und Protokolle ist vorsehbar. Entsprechende Schnittstellen und Werkzeuge sind, beziehungsweise werden durch die jeweilige Schnittstelleneinrichtung 8, 10 bereitgestellt.

Eine drahtlose Kommunikation kann dabei mittels WLAN, Bluetooth, Funk-Netz oder Infrarot realisiert sein.

Die Anzeige beziehungsweise Darstellung sowie der jeweilige Abruf der entsprechenden Informationen kann dabei im Zusammenwirken von Datenverarbeitungseinrichtung 6, Schnittstelleneinrichtungen 8,10 und MMI auswählbar/selektiv in Listenform, in Fließtext, mittels entsprechender Masken und/oder unter Einbindung von funktionalen Schaltflächen für verschiedenartige Filter und/oder Sortierungen erfolgen. Auch eine Konvertierung in andere Datenformate oder ein Export der jeweiligen Informationen in ein vorbestimmbares anderes Datenformat ist vorteilhaft möglich.

Die erste Schnittstelleneinrichtung 8 sowie die Datenverarbeitungseinrichtung 6 verfügen über die entsprechenden Mittel und Einrichtungen, eine Vielzahl unterschiedlicher Datenformate, insbesondere der verschiedenen Schaltanlagen-Module und/oder Geräte, erfassen und lesen zu können.

Darüber hinaus umfasst die Diagnose- und Wartungseinrichtung 4 wenigstens einen Datenspeicher 18 für die Speicherung von Daten zur Diagnose oder Wartung oder für zusätzliche Funktionen und Programmcodemittel, welche über das jeweilige Man-Machine-Interface und im Zusammenwirken mit der Datenverarbeitungseinrichtung 6 zugreifbar und abrufbar sowie insbesondere anzeigbar sind.

Auch ist vorsehbar, dass die Diagnose- und Wartungseinrichtung in Einschubtechnik als eines der Schaltanlagenmodule ausgebildet ist und somit je nach Bedarf temporär oder permanent in die jeweilige Schaltanlage eingesetzt werden kann.

Weiterhin kann die Diagnose- und Wartungseinrichtung individuell konfiguriert und durch Applikation oder Aufprägung entsprechender Programmcodemittel auf die Anforderungen/Anwendungsbereiche der jeweiligen Schaltanlage sowie deren Einbauten und Geräte/Module, insbesondere hinsichtlich Datenformaten und Kommunikationsprotokollen, abgestimmt und eingerichtet werden.

Die vorstehend angegebene Erfindung erleichtert den Zugang, insbesondere Fernzugang, zu den vor Ort gesicherten, beziehungsweise abgelegten Informationen, insbesondere Diagnose- und/oder Wartungsinformationen einer Niederspannungsschaltanlage.

Vorteilhaft ist vorsehbar, dass hierarchisch darüberliegende Systeme, beispielsweise ein entsprechendes Prozessleitsystem, automatisch, beziehungsweise automatisiert mittels beispielsweise Filetransfer und/oder über die wenigstens eine integrierte externe Schnittstelleneinrichtung auf die entsprechenden Informationen zugreifen können.

Zudem kann eine Ausgabe beziehungsweise ein Zugriff auf die vorliegenden Wartungs- und Diagnoseinformationen auch im Zusammenwirken mit einem unmittelbar an der Schaltanlage (vor Ort) vorgesehenen MMI, beispielsweise einen Touchscreen 20 oder ein Bedienpanel ermöglicht sein.

## Patentansprüche

1. Schaltanlage (1a,1b,1c), insbesondere Niederspannungsschaltanlage, umfassend kommunikationsfähige, in der Schaltanlage (1a,1b,1c) angeordnete und angeschlossene Geräte und/oder Einschubmodule, wobei die in der Schaltanlage (1a,1b,1c) angeordneten und angeschlossenen Geräte und/oder Einschubmodule MotorControl-Module, Motorstarter, Module zur Leistungsverteilung und Leistungsschalter umfassen, und Diagnose- und Wartungsinformationen im Gerät und/oder Einschubmodul selbst abrufbar gesichert oder hinterlegt sind,
wobei die Schaltanlage (1a,1b,1c) weiterhin eine Diagnose- und Wartungseinrichtung (4) aufweist, welche eine Datenverarbeitungseinrichtung (6) sowie eine erste interne Schnittstelleneinrichtung (8) umfasst, die in Kommunikationsverbindung mit allen kommunikationsfähigen, in der Schaltanlage (1a,1b,1c) angeordneten und angeschlossenen Geräten und/oder Einschubmodulen steht und deren Diagnose- und Wartungsinformationen und/oder Statusinformationen abfragt und aufbereitet und als verwertbare und menschenlesbare Information abrufbar bereitstellt und ausgibt und/oder anzeigt,
wobei zu einem Diagnose- oder Wartungsalarm oder einem Hinweis ein entsprechender Hilfetext in der Diagnose- und Wartungseinrichtung (4) verfügbar, bzw. abrufbar ist,
wobei die Diagnose- und Wartungseinrichtung (4) eine weitere externe Schnittstelleneinrichtung (10) zur externen Kommunikation, insbesondere über Inter- und/oder Ethernet, mit einer externen Datenverarbeitungseinrichtung (14,12) zur Ausgabe der aufbereiteten Diagnose- und Wartungsinformationen umfasst,
und die von dem Gerät und/oder Einschubmodul abgefragten Diagnose- und Wartungsinformationen gesammelt, mittels der Datenverarbeitungseinrichtung (6) aufbereitet und mittels der weiteren externen Schnittstelleinrichtung (10) mittels eines MAN-Machine-Interfaces(MMI) oder eines Human-Machine-Interfaches (HMI) auf wenigstens einer weiteren externen Datenverarbeitungseinrichtung (12, 14) ausgebbar sind, und wobei die Diagnose- und Wartungseinrichtung (4) einen Datenspeicher (18) zur Speicherung von Daten für die Diagnose und/oder Wartung und/oder Zustandsanalyse, welche über das jeweilige Man-Machine-Interface und im Zusammenwirken mit der Datenverarbeitungseinrichtung (6) zugreifbar und abrufbar sind, umfasst.

2. Schaltanlage nach einem der vorherigen Ansprüche, **dadurch gekennzeichnet, dass** die Diagnose- und Wartungseinrichtung (4) selbstkonfigurierend ist.

## Claims

1. Switchgear assembly (1a, 1b, 1c), in particular low-voltage switchgear assembly, comprising communications-ready apparatuses and/or withdrawal-part modules which are connected and arranged in the switchgear assembly (1a, 1b, 1c), wherein the apparatuses and/or withdrawal-part modules connected and arranged in the switchgear assembly (1a, 1b, 1c) comprise motor control modules, motor starters, modules for power distribution and circuit breakers, and diagnosis and maintenance information is secured or stored for callup in the apparatus and/or withdrawal-part module itself,
wherein the switchgear assembly (1a, 1b, 1c) also has a diagnosis and maintenance device (4) comprising a data processing device (6) and a first, internal interface device (8), which has a communications link to all communications-ready apparatuses and/or withdrawal-part modules connected and arranged in the switchgear assembly (1a, 1b, 1c) and retrieves the diagnosis and maintenance information and/or status information of said apparatuses and/or withdrawal-part modules and conditions said information and provides this information for callup as usable and human-readable information and outputs said information and/or displays said information,
wherein corresponding help text is available or can be called up in the diagnosis and maintenance device (4) in relation to a diagnosis or maintenance alarm or a notification,
wherein the diagnosis and maintenance device (4) comprises a further, external interface device (10) for external communication, in particular via Internet and/or Ethernet, with an external data processing device (14, 12) for outputting the conditioned diagnosis and maintenance information, and the diagnosis and maintenance information retrieved from the apparatus and/or withdrawal-part module is collected, is conditioned by means of the data processing device (6) and can be output by means of the further, external interface device (10) by means of a man-machine interface (MMI) or a human-machine interface (HMI) on at least one further external data processing device (12, 14), and wherein the diagnosis and maintenance device (4) comprises a data store (18) for storing data for diagnosis and/or maintenance and/or status analysis which can be accessed and retrieved via the respective man-machine interface and in interaction with the data processing device (6) .

2. Switchgear assembly according to one of the preceding claims, **characterized in that** the diagnosis and maintenance device (4) is self-configuring.

## Revendications

1. Installation de distribution (1a, 1b, 1c), en particulier installation de distribution basse tension, comprenant des appareils et/ou modules enfichables disposés et connectés dans l'installation de distribution (1a, 1b, 1c), les appareils et/ou modules enfichables, disposés et connectés dans l'installation de distribution (1a, 1b, 1c), comprenant des modules de commande de moteur, des démarreurs de moteur, des modules de distribution de puissance et des disjoncteurs, et des informations de diagnostic et de maintenance étant sauvegardées ou mémorisées de manière à être consultables dans l'appareil et/ou le module enfichable eux-mêmes,
l'installation de distribution (1a, 1b, 1c) présentant en outre un dispositif de diagnostic et de maintenance (4) qui comprend un dispositif de traitement de données (6) ainsi qu'un premier dispositif d'interface interne (8) qui est en liaison de communication avec tous les appareils et/ou modules enfichables, disposés et connectés dans l'installation de distribution (1a, 1b, 1c), pouvant communiquer, et qui consulte et édite leurs informations de diagnostic et de maintenance et/ou leurs informations d'état et les fournit de manière consultable sous forme d'informations utilisables et lisibles par l'homme et les sort et/ou les affiche,
dans laquelle, pour une alarme de diagnostic ou de maintenance ou une indication, un texte d'aide correspondant est disponible ou consultable dans le dispositif de diagnostic et de maintenance (4),
dans laquelle le dispositif de diagnostic et de maintenance (4) comprend un autre dispositif d'interface externe (10) destiné à la communication externe, en particulier par internet et/ou Ethernet, avec un dispositif de traitement de données externe (14, 12) pour sortir les informations de diagnostic et de maintenance éditées,
et les informations de diagnostic et de maintenance consultées par l'appareil et/ou le module enfichable sont collectées, éditées au moyen du dispositif de traitement de données (6), et peuvent être sorties au moyen de l'autre dispositif d'interface externe (10) au moyen d'une interface homme-machine (MMI) ou d'une interface humain-machine (HMI) sur au moins un autre dispositif de traitement de données externe (12, 14), et le dispositif de diagnostic et de maintenance (4) comprend une mémoire de données (18) pour stocker des données pour le diagnostic et/ou la maintenance et/ou l'analyse d'état qui est accessible et consultable par l'intermédiaire de l'interface homme-machine respective et en coopération avec le dispositif de traitement de données (6).

2. Installation de distribution selon l'une quelconque des revendications précédentes, **caractérisé en ce que** le dispositif de diagnostic et de maintenance (4) est auto-configurable.
